Europäisches Patentamt

European Patent Office

Office européen des brevets

(11) Publication number: **0 262 816**
**A2**

# EUROPEAN PATENT APPLICATION

(21) Application number: 87307933.9

(51) Int. Cl.⁴: **G06F 15/332**

(22) Date of filing: 08.09.87

(30) Priority: 08.09.86 US 904421

(43) Date of publication of application:
**06.04.88 Bulletin 88/14**

(84) Designated Contracting States:
**AT BE CH DE ES FR GB GR IT LI LU NL SE**

(71) Applicant: **Zoran Corporation**
**3450 Central Expressway**
**Santa Clara California 95051(US)**

(72) Inventor: **Retter, Rafi**
**19 Adam Hacohen Street**
**Haifa(IL)**

(74) Representative: **Cross, Rupert Edward Blount**
**et al**
**BOULT, WADE & TENNANT 27 Furnival Street**
**London EC4A 1PQ(GB)**

(54) Computation apparatus and method.

(57) A pipeline dprocessing computation apparatus for performing the Butterfly operation on complex data (A, B) as weighted by a complex factor (W) in accordance with the equations
$$X = A + WB$$
$$Y = A - WB$$
in which partial products for subsequent data ($A_1$, $B_1$) weighted by a factor ($W_1$) are obtained while the sum and difference of A and WB are obtained. In a preferred embodiment the total operation for one set of data is eleven clock cycles, and three sets of data can be operated on concurrently whereby two inputs are provided and two outputs obtained every four cycles.

EP 0 262 816 A2

## COMPUTATION APPARATUS AND METHOD

This invention relates to a computation apparatus and method, and particularly to fast Fourier transforms (FFT) as used in spectrum analysis, and more particularly to such apparatus and method utilising the decimation in time algorithm used in FFT and referred to as the Butterfly operation.

Rabiner and Gold, Theory and Application of Digital Signal Processing, Prentice Hall, 1975 discusses spectrum analysis and the fast Fourier transform. As described therein a basic operation of the decimation in time algorithm used in FFT is the so-called Butterfly in which two complex number inputs, A and B, are combined with a weighting factor, W, to give the two outputs X and Y via the operation

$$X = A + W_N^K B$$
$$Y = A - W_N^K B$$

According to this invention there is provided computation apparatus for performing a Butterfly operation on complex data (A,B) as weighted by a complex factor (W) in accordance with the equations

$$X = A + WB$$
$$Y = Z - WB$$

characterised by an A register, A B register, a two stage multiplier having inputs for receiving and multiplying the real and imaginary components of the B data by the real and imaginary components of the factor W, and developing real and imaginary partial products, adder means for receiving and adding said real and imaginary partial products and producing real and imaginary total products, said adder means further receiving and adding real and imaginary components of the A data to said real and imaginary total products, subtracter means having inputs for receiving said real and imaginary total products from said adder means and for receiving real and imaginary components of the A data, said subtracter means subtracting said real and imaginary total products from said real and imaginary components of the A data, and output register means for receiving from said adder means the sum of the real and imaginary A data and said real and imaginary total products, and receiving from said subtracter means the difference of the real and imaginary A data and said real and imaginary total products.

Also according to this invention there is provided a computation method of performing a Butterfly operation on complex data (A,B) as weighted by a complex factor (W) in accordance with the equations

$$X = A + WB$$
$$Y = A - WB$$

characterised by the steps of

(a) obtaining a first of the real and imaginary partial products of W and B,

(B) summing said first partial products to obtain a first total product while a second of the real and imaginary partial products of W and B is obtained,

(c) summing and subtracting said first total prouct and A data while another partial product of said second of the real and imaginary partial products of W and B is obtained,

(d) summing said second partial products to obtain a second total product, and summing and

(e) subtracting said second total product from said A data.

The invention provides an apparatus and method for expeditiously performing Butterfly operations on a plurality of sets of complex data. A pipelined mode of operation is employed whereby several sets of data are operated on concurrently, and two inputs are entered and two outputs are generated every four cycles.

One input, B, is applied to a multiplier along with the factor, $W_N^K$. Since both numbers are complex, four multiplications are required to develop real and imaginary partial products, and the real and imaginary partial products must be added to obtain the total real and imaginary products. The other input, A, is added and substracted as the real-imaginary products are obtained.

In a preferred embodiment, one complete operation on one set of data requires 11 clock cycles. Pipelining is employed so that operations on three sets of data are performed concurrently, whereby a four clock cycle performance is realized in obtaining data set outputs.

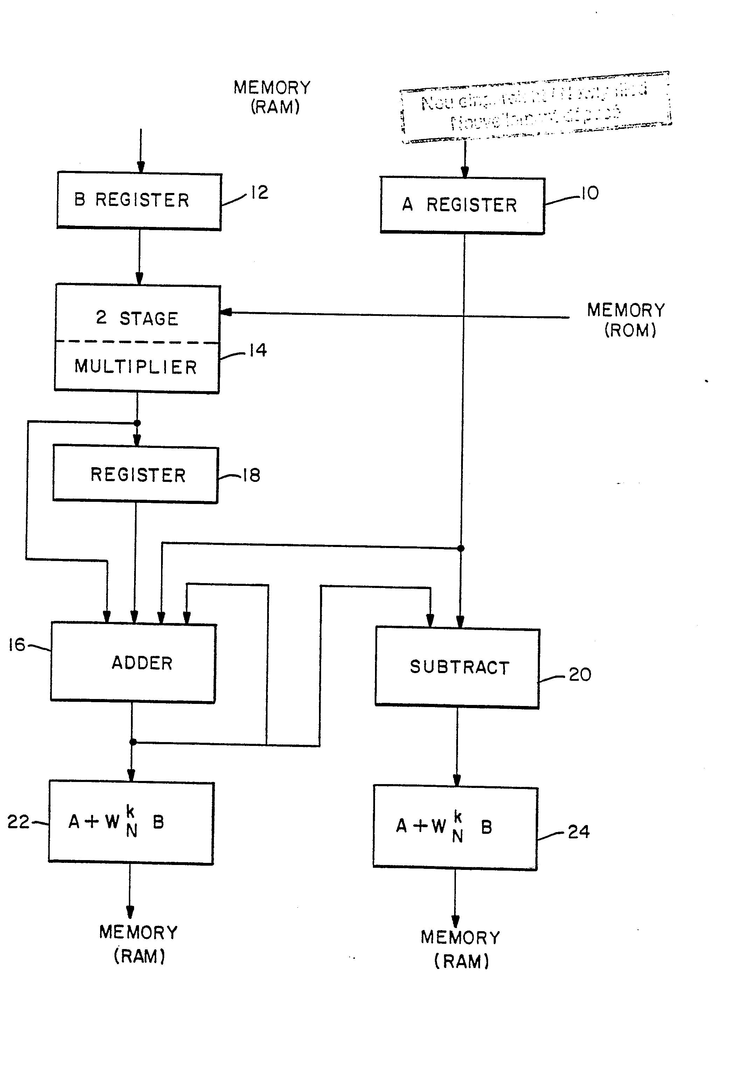

The invention will now be described by way of example with reference to the drawing which is a functional block diagram of a preferred embodiment of apparatus according to the invention.

Referring now to the drawing, the FFT Butterfly computation apparatus here shown includes a random access memory for storing A and B data points, and for storing the computed outputs. A read-only memory is provided in which weighting constants, $W_N^K$, are stored. Since all of the data and numbers are complex, a plurality of multiplications and additions are required to obtain the real and imaginary portions of the final outputs. An A register 10 is provided for storing the A data from memory, and a B register 12 is provided

2

for storing the B data from memory. As above noted, the data and weighting factors are combined in accordance with the operation

$$X = A + W_N^K B$$
$$Y = A - W_N^K B$$

The multiplication takes place in a two stage multiplier 14 which sequentially multiplies the real portions of the B data and the $W_N^K$ weighting factor and then the imaginary portions of the B data and $W_N^K$ weighting factor to obtain the real partial products of the final output. Thereafter, the multiplier 14 multiplies the real and imaginary portions of the B data and $W_N^K$ weighting factor to obtain the imaginary partial products of the final output. The total real and imaginary products are obtained in an Adder 16; the register 18 is interposed between multiplier 14 and Adder 16 for delay purposes.

As the real and imaginary partial products of the number are obtained, the A data from register 10 is applied to the Adder 16 and to a Subtracter 20 to obtain the final output data, $A \pm W_N^K B$, which is then placed in registers 22 and 24 prior to storage in memory.

Advantageously, a pipeline mode of operation is employed whereby computations on three sets of data are concurrently performed thereby providing a four cycle effective operation; that is, two inputs are entered and two outputs are obtained every four clock cycles.

This is illustrated in the following flow diagram

| CLOCK CYCLE | OPERATION |
|---|---|
| 1 | Load B register 12 |
| 2 | Multiply B real and W real in multiplexer 14 |
| 3 | Multiply B real and W real in multiplier 14<br>Multiply B imag. and W imag. in multiplier 14<br>Load B real x W real product in register 18 |
| 4 | Multiply B imag. and W imag. in multiplier 14<br>Multiply B imag. and W real in multiplier 14<br>Load A register 10<br>Load B imag. x W real product in register 18 |

5      Add B real x W real and B image x W image products in adder 16
Multiply B imag. and W real in multiplier 14
Multiply B real and W imag. in multiplier 14

6      Add (B&W) real portion to A real in adder 16
Subtract B real x W real products from A real in subtracter 20
Multiply B real and W imag. in multiplier 14
Load A - WB (real) in register 24

7      Load A + WB (real) in register 22

       Add B imag. x W real and B real x W imag. products in adder 16

8      Add A imag. to B x W imag. product in adder 16
Subtract B x W imag. from A imag. in subtracter 20

9      Load A + WB (imag.) in register 22
Load A - WB (imag.) in register 24

10     Store A - WB in memory

11     Store A + WB in memory

DATA SEQUENCES

$A_1, B_1, W_1$

CLK 1
2
3
4     $A_2, B_2, W_2$
5     CLK 1 2
6        2
7        3
8        4     $A_3, B_3, W_3$
9        5     1
10       6     2
11       7     3
        8     4     $A_3, B_4, W_4$
        9     5     1
      10    6     2
      11    7     3
           8     4
           9     5
         10    6
         11    7
               8
               9
            10
            11

From the above diagram it will be noted that during the first eleven clock cycles operation on three sets of data is begun (at clock cycle 1, clock cycle 5, and clock cycle 9) and outputs are obtained at clock cycles 10 and 11. Thereafter, two inputs and two outputs (for separate data sets) are provided.

The pipelined mode of operation of a Butterfly circuit as described above expedites the processing of data in implementing the decimation in time algorithm for fast Fourier transforms.

## Claims

1. Computation apparatus for performing a Butterfly operation on complex data (A,B) as weighted by a complex factor (W) in accordance with the equations

$$X = A + WB$$
$$Y = A - WB$$

characterised by an A register (10), a B register (12), a two stage multiplier (14) having inputs for receiving and multiplyiing the real and imaginary components of the B data by the real and imaginary components of the factor W, and developing real and imaginary partial products, adder means (16) for receiving and adding said real and imaginary partial products and producing real and imaginary total products, said adder means further receiving and adding real and imaginary components of the A data to said real and imaginary total products, subtracter means (20) having inputs for receiving said real and imaginary total products from said adder means (16) and for receiving real and imaginary components of the A data, said subtracter means (20) subtracting said real and imaginary total products from said real and imaginary components of the A data, and output register means (22, 24) for receiving from said adder means (16) the sum of the real and imaginary A data and said real and imaginary total products, and receiving from said subtracter means (20) the difference of the real and imaginary A data and said real and imaginary total products.

2. Apparatus as claimed in Claim 1, characterised in that said adder means (16) produces said real total products while said multiplier (14) produces one of said imaginary partial products, and in that said adder means (16) and said subtracter means (20) receive and add and subtract, respectively, said real component of A data and said real total product while said adder means produces another of said imaginary partial products.

3. Apparatus as claimed in Claim 2, characterised in that said adder means (16) produces said imaginary total product while said multiplier (14) produces one of real partial products for following data, and in that said adder means (16) and said subtracter means (20) receive and add and substract, respectively, said imaginary component of A data and said imaginary total product while said multiplier (14) produces a real partial product for said following data.

4. Apparatus as claimed in any preceding claim, characterised by random access memory means for storing said A and B data and for storing said sum and said difference of said A data and said total products, and a read only memory for storing said factor W.

5. A computation method of performing a Butterfly operation on complex data (A,B) as weighted by a complex factor (W) in accordance with the equations

$$X = A + WB$$
$$Y = A - WB$$

(a) obtaining a first of the real and imaginary partial products of W and B,

(b) summing said first partial products to obtain a first total product while a second of the real and imaginary partial products of W and B is obtained,

(c) summing and subtracting said first total product and A data while another partial product of said second of the real and imaginary partial products of W and B is obtained,

(d) summing said second partial products to obtain a second total product, and summing and

(e) subtracting said second total product from said A data.

6. A method as claimed in Claim 5, characterised by repeating step (a) for subsequent data ($A_1$, $B_1$) while step (d) is performed on data (A,B).

MEMORY
(RAM)

B REGISTER — 12

A REGISTER — 10

2 STAGE

MULTIPLIER — 14

MEMORY
(ROM)

REGISTER — 18

16 — ADDER

SUBTRACT — 20

22 — $A + W_N^k\ B$

$A + W_N^k\ B$ — 24

MEMORY
(RAM)

MEMORY
(RAM)